# EUROPEAN PATENT APPLICATION

(11) **EP 4 604 621 A1**
(43) Date of publication of application: **20.08.2025**
(21) Application number: 23893633.0
(22) Date of filing: 08.11.2023
(51) Int. Cl.: H04W 52/02

(54) **COMMUNICATION METHOD AND COMMUNICATION APPARATUS**

(30) Priority: 23.11.2022 CN 202211477079
(71) Applicant: Huawei Technologies Co., Ltd., Shenzhen, Guangdong 518129 (CN)
(72) Inventor: JIANG, Binbin, Shenzhen, Guangdong 518129 (CN); TANG, Yunshuai, Shenzhen, Guangdong 518129 (CN); LI, Weihua, Shenzhen, Guangdong 518129 (CN); MA, Yunsi, Shenzhen, Guangdong 518129 (CN)
(74) Representative: Pfenning, Meinig & Partner mbB
(86) International application number: PCT/CN2023/130347
(87) International publication number: WO 2024/109542

(57) **Abstract**

This application provides a communication method and apparatus. In the method, a first symbol set is introduced into a PPDU, to provide sufficient switching time for a Wi-Fi device to switch from a first running mode to a second running mode. This ensures data receiving performance of the Wi-Fi device. This application is applied to a wireless local area network system that supports 802.11 series protocols such as a next-generation Wi-Fi protocol of IEEE 802.11ax like 802.11be, Wi-Fi 7, or an EHT, a next-generation protocol of 802.11be like Wi-Fi 8 or UHR, and Wi-Fi AI; and is alternatively applied to a UWB-based wireless personal area network system, a sensing system, or the like.

## Description

This application claims priority to Chinese Patent Application No. 202211477079.8, filed with the China National Intellectual Property Administration on November 23, 2022 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

A wireless fidelity (wireless fidelity, Wi-Fi) device listens to and receives data from an access point (access point, AP) in a listening mode at a large bandwidth. Due to a large amount of time consumed in the listening mode, power consumption of the listening mode is high. Therefore, reducing listening power consumption of the Wi-Fi device is key to implementing the Wi-Fi device with low power consumption.

In a possible implementation, the Wi-Fi device is allowed to perform low power consumption listening in manners of a small bandwidth, a low modulation and coding scheme (modulation and coding scheme, MCS), or the like, to implement the Wi-Fi device with low power consumption. However, in this implementation, the Wi-Fi device with low power consumption cannot receive, due to a bandwidth limitation, the data sent by the AP.

### SUMMARY

This application provides a communication method and a communication apparatus, to ensure data receiving performance of a device.

According to a first aspect, a communication method is provided. The method may be performed by a first device, or may be performed by a chip or a circuit disposed in the first device. This is not limited in this application.

The method may include: A first device receives a first part of a protocol data unit PPDU from a second device in a first running mode, where the first part includes a first signaling SIG symbol set and a first symbol set, one SIG symbol in the first SIG symbol set includes an identifier of the first device, and the first symbol set is used to provide switching time for the first device to switch from the first running mode to a second running mode; and the first device receives a second part of the PPDU in the second running mode.

In a possible implementation, the first symbol set is located after the first SIG symbol set.

In the foregoing technical solution, the first symbol set is introduced into the PPDU, so that sufficient switching time is provided for the first device to switch from the first running mode to the second running mode to receive data. This ensures data receiving performance.

For example, a SIG symbol set in an EHT PPDU is an EHT-SIG symbol set, a SIG symbol set in a VHT PPDU is a VHT-SIG symbol set, and a SIG symbol set in an HE PPDU is an HE-SIG symbol set.

In a possible scenario, the first device is a STA, the second device is an AP, the first running mode is an LP mode, the second running mode is an LP mode, and the STA uses the LP mode to perform listening. When the AP needs to send a data frame to the STA using the LP mode, the AP adds the first symbol set to the PPDU to provide sufficient time for switching from the LP mode to the HP mode for the STA, to ensure that the STA has stably operated in the HP mode before receiving data; and the STA can perform listening in the low power consumption mode, receive data in high power consumption mode, to achieve high energy efficiency of the STA.

In some implementations of the first aspect, the method further includes: The first device switches from the first running mode to the second running mode in duration of the first symbol set.

In some implementations of the first aspect, the second part of the PPDU includes data. The method further includes: The first device sends a first frame to the second device, where the first frame indicates that the first device has successfully received the PPDU; and the first device switches from the second running mode to the first running mode.

Optionally, the second part of the PPDU further includes an X-LTF. For example, the X-LTF in the EHT PPDU is an EHT-LTF, the X-LTF in the VHT PPDU is a VHT-LTF, and the X-LTF in the HE PPDU is an HE-LTF.

In some implementations of the first aspect, the method further includes: The first device sends a second frame to the second device, where the second frame includes a first switching parameter, and the first switching parameter indicates the switching time for the first device to switch from the first running mode to the second running mode.

In some implementations of the first aspect, the first switching parameter is less than or equal to the duration of the first symbol set, or the first switching parameter is a quantity of symbols included in the first symbol set.

Optionally, the first symbol set includes L symbols, L is a positive integer, and duration of each of the L symbols is first duration. For example, the first duration is 4 µs.

Optionally, the first symbol set is a second SIG symbol set.

In some implementations of the first aspect, the PPDU is transmitted on a first link, the first link is one of N links, and all the N links are communication links between the first device and the second device; and the second frame includes N groups of running mode parameters, the N groups of running mode parameters one-to-one correspond to the N links, each group of parameters includes the following parameters: switching time for the first device to switch from the first running mode to the second running mode on a link corresponding to the parameter, switching time for the first device to switch from the second running mode to the first running mode on the link corresponding to the parameter, and a channel bandwidth used by the first device in the first running mode on the link corresponding to the parameter.

In some implementations of the first aspect, the method further includes: The first device sends a third frame to the second device, where the third frame includes a first state and a switching mode, the first state indicates that the first device is in the first running mode or the second running mode, and the switching mode is used to request whether to switch between the first running mode and the second running mode; and
the first device receives a fourth frame from the second device, where the fourth frame indicates whether switching between the first running mode and the second running mode is allowed.

In the foregoing technical solution, the first device may dynamically request to switch between different running modes of the first device.

In some implementations of the first aspect, the third frame further includes M groups of running mode parameters, the M groups of running mode parameters one-to-one correspond to M links, all the M links are communication links between the first device and the second device, and each group of parameters includes the following parameters: switching time for the first device to switch from the first running mode to the second running mode on a link corresponding to the parameter, switching time for the first device to switch from the second running mode to the first running mode on the link corresponding to the parameter, and a channel bandwidth used by the first device in the first running mode on the link corresponding to the parameter.

In some implementations of the first aspect, a channel bandwidth used by the first device in the first running mode is 20 MHz, and a resource unit RU corresponding to the first SIG symbol set is allocated to a primary 20 MHz channel. That the first device receives the first part of the PPDU in the first running mode includes: The first device receives the first SIG symbol set on the primary 20 MHz channel.

In a possible scenario, to reduce power consumption, the STA in the LP mode performs low power consumption listening on only a 20 MHz channel bandwidth. When the STA detects a data frame delivered by the AP, the STA receives and demodulates the first SIG symbol set only on the primary 20 MHz channel. To obtain all information of the STA that is indicated by the first SIG symbol set, the AP needs to be restricted to allocate all corresponding RUs in the first SIG symbol set to the primary 20 MHz channel.

In some implementations of the first aspect, the first symbol set is a second SIG symbol set, the PPDU includes a U-SIG symbol, the U-SIG symbol includes first information, and the first information indicates whether a total quantity of SIG symbols in the first SIG symbol set and the second SIG symbol set exceeds a first value; and when the total quantity of SIG symbols in the first SIG symbol set and the second SIG symbol set is less than or equal to the first value, a first field in the U-SIG symbol indicates the total quantity of SIG symbols in the first SIG symbol set and the second SIG symbol set; or when the total quantity of SIG symbols in the first SIG symbol set and the second SIG symbol set is greater than the first value, a first field in the U-SIG symbol indicates a difference between the total quantity and the first value.

In the foregoing technical solution, when the quantity of SIG symbols in the first SIG symbol set and the second SIG symbol set does not exceed the first value, a legacy device is compatible, and simultaneous scheduling of an LP STA, a non-LP STA, and a legacy STA is supported. This improves scheduling flexibility and efficiency. In addition, in this solution, the quantity of SIG symbols in the first SIG symbol set and the second SIG symbol set can exceed the first value. This improves compatibility of this solution with different devices.

It should be noted that a user domain of each SIG symbol in the first SIG symbol set and the second SIG symbol set includes one STA identifier. The identifier in the user domain of each SIG symbol in the first SIG symbol set is an identifier (namely, a STA-ID) of a STA associated with the AP, so that after receiving the first SIG symbol set, the STA associated with the AP determines whether the PPDU includes data sent to the STA. However, the identifier in the user domain of each SIG symbol in the second SIG symbol set needs to be different from an identifier of any device in devices associated with the second device, to prevent the device associated with the second device from incorrectly detecting information about the SIG symbol in the second SIG symbol set.

In some implementations of the first aspect, the U-SIG symbol includes second information, and the second information indicates a quantity of SIG symbols in the first SIG symbol set.

In the foregoing technical solution, the second information can effectively avoid demodulation overheads of the first symbol set by the first device. The reason is as follows: Because the user domain of each SIG symbol in the first symbol set and the first SIG symbol set include one identifier, if the PPDU does not include the second information, after the STA receives the PPDU, if the STA detects, in the first SIG symbol set, no STA-ID that matches the STA, the STA demodulates each SIG symbol in the first symbol set. It can be learned from the foregoing that the first symbol set is only used for mode switching, each SIG symbol in the first symbol set definitely does not include a STA-ID that matches the STA. Therefore, overheads are increased when the STA demodulates the first symbol set. However, the AP notifies the STA of the second information by using the PPDU. In this case, the STA knows a position of the first symbol set, and does not demodulate a symbol in the first symbol set. This effectively avoids demodulation overheads of the STA.

In some implementations of the first aspect, the first device has a plurality of groups of switching parameters on a second link, where the second link is a communication link between the first device and the second device, one of the plurality of groups of switching parameters includes two parameters, one of the two parameters indicates the switching time for the first device to switch from the first running mode to the second running mode, and the other of the two parameters indicates the switching time for the first device to switch from the second running mode to the first running mode.

According to a second aspect, a communication method is provided. The method may be performed by a second device, or may be performed by a chip or a circuit disposed in the second device. This is not limited in this application.

The method may include: A second device determines a protocol data unit PPDU, where the PPDU includes a first signaling SIG symbol set and a first symbol set, one SIG symbol in the first SIG symbol set includes an identifier of a first device, and the first symbol set is used to provide switching time for the first device to switch from a first running mode to a second running mode; and the second device sends the PPDU to the first device using the first running mode.

In a possible implementation, the first symbol set is located after the first SIG symbol set.

For beneficial effect of the second aspect, refer to the description in the first aspect. Details are not described herein again.

In some implementations of the second aspect, the method further includes: The second device receives a first frame from the first device, where the first frame indicates that the first device has successfully received the PPDU.

In some implementations of the second aspect, the method further includes: The second device receives a second frame from the first device, where the second frame includes a first switching parameter, and the first switching parameter indicates the switching time for the first device to switch from the first running mode to the second running mode.

In some implementations of the second aspect, the first switching parameter is less than or equal to duration of the first symbol set, or the first switching parameter is a quantity of symbols included in the first symbol set.

In some implementations of the second aspect, the PPDU is transmitted on a first link, the first link is one of N links, and all the N links are communication links between the first device and the second device; and the second frame includes N groups of running mode parameters, the N groups of running mode parameters one-to-one correspond to the N links, each group of parameters includes the following parameters: switching time for the first device to switch from the first running mode to the second running mode on a link corresponding to the parameter, switching time for the first device to switch from the second running mode to the first running mode on the link corresponding to the parameter, and a channel bandwidth used by the first device in the first running mode on the link corresponding to the parameter.

In some implementations of the second aspect, the method further includes: The second device receives a third frame from the first device, where the third frame includes a first state and a switching mode, the first state indicates that the first device is in the first running mode or the second running mode, and the switching mode is used to request whether to switch between the first running mode and the second running mode; and the second device sends a fourth frame to the first device, where the fourth frame indicates whether switching between the first running mode and the second running mode is allowed.

In some implementations of the second aspect, the third frame further includes M groups of running mode parameters, the M groups of running mode parameters one-to-one correspond to M links, all the M links are communication links between the first device and the second device, and each group of parameters includes the following parameters: switching time for the first device to switch from the first running mode to the second running mode on a link corresponding to the parameter, switching time for the first device to switch from the second running mode to the first running mode on the link corresponding to the parameter, and a channel bandwidth used by the first device in the first running mode on the link corresponding to the parameter.

In some implementations of the second aspect, a channel bandwidth used by the first device in the first running mode is 20 MHz, and a resource unit RU corresponding to the first SIG symbol set is allocated to a primary 20 MHz channel. That the second device sends the PPDU to the first device in the first running mode includes: The second device sends the first SIG symbol set on the primary 20 MHz channel.

In some implementations of the second aspect, the first symbol set is a second SIG symbol set, the PPDU includes a U-SIG symbol, the U-SIG symbol includes first information, and the first information indicates whether a total quantity of SIG symbols in the first SIG symbol set and the second SIG symbol set exceeds a first value; and when the total quantity of SIG symbols in the first SIG symbol set and the second SIG symbol set is less than or equal to the first value, a first field in the U-SIG symbol indicates the total quantity of SIG symbols in the first SIG symbol set and the second SIG symbol set; or when the total quantity of SIG symbols in the first SIG symbol set and the second SIG symbol set is greater than the first value, a first field in the U-SIG symbol indicates a difference between the total quantity and the first value.

In some implementations of the second aspect, the U-SIG symbol includes second information, and the second information indicates a quantity of SIG symbols in the first SIG symbol set.

In some implementations of the second aspect, the first device has a plurality of groups of switching parameters on a second link, where the second link is a communication link between the first device and the second device, one of the plurality of groups of switching parameters includes two parameters, one of the two parameters indicates the switching time for the first device to switch from the first running mode to the second running mode, and the other of the two parameters indicates the switching time for the first device to switch from the second running mode to the first running mode.

In some implementations of the second aspect, the first running mode is a low power consumption listening mode, and the second running mode is a high power consumption receiving mode.

According to a third aspect, a communication apparatus is provided. The apparatus is configured to perform the method provided in the first aspect. Specifically, the apparatus may include modules configured to perform any one of the first aspect or the possible implementations of the first aspect.

According to a fourth aspect, a communication apparatus is provided. The apparatus is configured to perform the method provided in the second aspect. Specifically, the apparatus may include modules configured to perform any one of the second aspect or the possible implementations of the second aspect.

According to a fifth aspect, a communication apparatus is provided, and includes a processor. The processor is coupled to a memory, and may be configured to execute instructions in the memory, to implement the method according to any one of the first aspect or the possible implementations of the first aspect. Optionally, the apparatus further includes the memory. Optionally, the apparatus further includes a communication interface, and the processor is coupled to the communication interface.

In an implementation, the apparatus is a first device. When the apparatus is the first device, the communication interface may be a transceiver or an input/output interface.

In another implementation, the apparatus is a chip disposed in a first device. When the apparatus is the chip disposed in the first device, the communication interface may be an input/output interface.

In another implementation, the apparatus is a chip or a chip system.

Optionally, the transceiver may be a transceiver circuit. Optionally, the input/output interface may be an input/output circuit.

According to a sixth aspect, a communication apparatus is provided, and includes a processor. The processor is coupled to a memory, and may be configured to execute instructions in the memory, to implement the method according to any one of the second aspect or the possible implementations of the second aspect. Optionally, the apparatus further includes the memory. Optionally, the apparatus further includes a communication interface, and the processor is coupled to the communication interface.

In an implementation, the apparatus is a second device. When the apparatus is the second device, the communication interface may be a transceiver or an input/output interface.

In another implementation, the apparatus is a chip disposed in a second device. When the apparatus is the chip disposed in the second device, the communication interface may be an input/output interface.

In another implementation, the apparatus is a chip or a chip system.

Optionally, the transceiver may be a transceiver circuit. Optionally, the input/output interface may be an input/output circuit.

According to a seventh aspect, a computer-readable storage medium is provided. The computer-readable storage medium stores computer instructions. When the computer instructions are executed by an apparatus, the apparatus is enabled to implement the method according to any one of the first aspect or the possible implementations of the first aspect.

According to an eighth aspect, a computer-readable storage medium is provided. The computer-readable storage medium stores computer instructions. When the computer instructions are executed by an apparatus, the apparatus is enabled to implement the method according to any one of the second aspect or the possible implementations of the second aspect.

According to a ninth aspect, a computer program product including instructions is provided. The computer program product includes a computer program. When the computer program is executed by an apparatus, the apparatus is enabled to implement the method according to any one of the first aspect or the possible implementations of the first aspect.

According to a tenth aspect, a computer program product including instructions is provided. The computer program product includes a computer program. When the computer program is executed by an apparatus, the apparatus is enabled to implement the method according to any one of the second aspect or the possible implementations of the second aspect.

According to an eleventh aspect, a communication system is provided, including the foregoing first device and the second device.

### BRIEF DESCRIPTION OF DRAWINGS

FIG. 1 is a diagram of a network architecture of a wireless local area network to which an embodiment of this application is applicable;
FIG. 2 is a diagram of a simple multi-link communication scenario;
FIG. 3 is a schematic block diagram of a communication method according to an embodiment of this application;
FIG. 4 is a diagram of a frame structure of an EHT PPDU;
FIG. 5 is a diagram of a frame structure of a new EHT PPDU according to this application;
FIG. 6 is a diagram of a structure of an LP capabilities element according to this application;
FIG. 7 is a diagram of a structure of an LP capabilities element according to this application;
FIG. 8 is a diagram of dynamically requesting to switch a running mode according to this application;
FIG. 9 is a diagram of indicating an LP request/response frame by using an EHT action field according to this application;
FIG. 10 is a diagram of indicating an LP request/response frame by using a category field according to this application;
FIG. 11 is a diagram of an LP action element indicating an LP request/response frame according to this application;
FIG. 12 is a diagram of a complete implementation procedure of frame interaction for a STA to request switching between different running modes according to this application;
FIG. 13 is a diagram of a structure of an extended capabilities element;
FIG. 14 is a schematic block diagram of a communication apparatus 200 according to an embodiment of this application;
FIG. 15 is a schematic block diagram of a communication apparatus 300 according to an embodiment of this application; and
FIG. 16 is a diagram of a chip system 1300 according to an embodiment of this application.

### DESCRIPTION OF EMBODIMENTS

The following describes technical solutions of this application with reference to accompanying drawings.

The technical solutions provided in embodiments of this application are applicable to a wireless local area network (wireless local area network, WLAN) scenario. For example, IEEE 802.11 -related standards such as the 802.11a/b/g standard, the 802.11n standard, the 802.11ac standard, the 802.11ax standard, a next-generation Wi-Fi protocol of IEEE 802.11ax like 802.11be, Wi-Fi 7, an extremely high throughput (extremely high throughput, EHT), 802.11ad, 802.11ay, or 802.11bf, are supported. For another example, a next generation protocol of 802.11be or Wi-Fi 8, is supported. The technical solutions provided in embodiments of this application may be applied to an ultra-wideband (ultra-wideband, UWB)-based wireless personal area network system, for example, the 802.15 series standards, or may be applied to a sensing (sensing) system, for example, the 802.11bf series standards. The 802.11n standard is referred to as a high throughput (high throughput, HT), the 802.11ac standard is referred to as a very high throughput (very high throughput, VHT), the 802.11ax standard is referred to as high efficiency (high efficiency, HE), and the 802.11be standard is referred to as an extremely high throughput (extremely high throughput, EHT). 802.11bf includes two major categories of standards: a low frequency (Sub-7 GHz) and a high frequency (60 GHz). Sub-7 GHz is implemented mainly based on standards such as 802.11ac, 802.11ax, 802.11be, and a next-generation standard of 802.11be. 60 GHz is implemented mainly based on standards such as 802.11ad, 802.11ay, and a next-generation standard of 802.11ay. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any suitable wireless network.

The WLAN may include a plurality of basic service sets (basic service sets, BSSs). Network nodes in the basic service set include a station (station, STA) and an access point (access point, AP). Each BSS may include one AP and a plurality of STAs associated with the AP.

The AP in embodiments of this application may also be referred to as a wireless access point, a hotspot, or the like. The AP is an access point for a mobile user to access a wired network, and is mainly deployed in a home, inside a building, and inside a campus, with a typical coverage radius of tens of meters to hundreds of meters. Certainly, the AP may alternatively be deployed outdoors. The AP is equivalent to a bridge that connects a wired network and a wireless network. A main function of the AP is to connect wireless network clients together, and then connect the wireless network to the Ethernet. Specifically, the AP may be a terminal device or a network device that has a Wi-Fi chip. Optionally, the AP may be a device that supports a plurality of WLAN standards such as 802.11a/b/g, 802.11n, 802.11ac, 802.11ax, and 802.11be or a later version that is currently being discussed.

The access point in this application may be a high efficiency (high efficiency, HE) STA, an extremely high throughput (extremely high throughput, EHT) STA, or a STA applicable to a future-generation Wi-Fi standard.

For example, the access point and the station may be devices used in an internet of vehicles, internet of things nodes, sensors, or the like in an internet of things (IoT, internet of things), smart cameras, smart remote controls, smart water or electricity meters, or the like in a smart home, sensors in a smart city.

The STA in embodiments of this application may be a wireless communication chip, a wireless sensor, or a wireless communication terminal, for example, a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, and a computer supporting a Wi-Fi communication function. Optionally, the STA may support an 802.11ax standard. Further, optionally, the STA supports a plurality of WLAN standards such as 802.11ac, 802.11n, 802.11g, 802.11b, and 802.11a, or a subsequent version.

In embodiments of this application, the STA or the AP includes a hardware layer, an operating system layer that runs on the hardware layer, and an application layer that runs on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an entity for performing a method provided in embodiments of this application is not particularly limited in embodiments of this application, provided that the entity can run a program that records code of the method provided in embodiments of this application to perform communication according to the method provided in embodiments of this application. For example, the entity for performing the method provided in embodiments of this application may be a STA, an AP, or a functional module that is in a STA or an AP and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry instructions and/or data.

Alternatively, embodiments of this application are applicable to a wireless local area network system, for example, an internet of things (internet of things, IoT) network or a vehicle-to-everything (Vehicle to X, V2X). Certainly, embodiments of this application are further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The foregoing communication systems applicable to this application are only examples for descriptions, and the communication systems applicable to this application are not limited thereto. This is uniformly described herein, and details are not described below again.

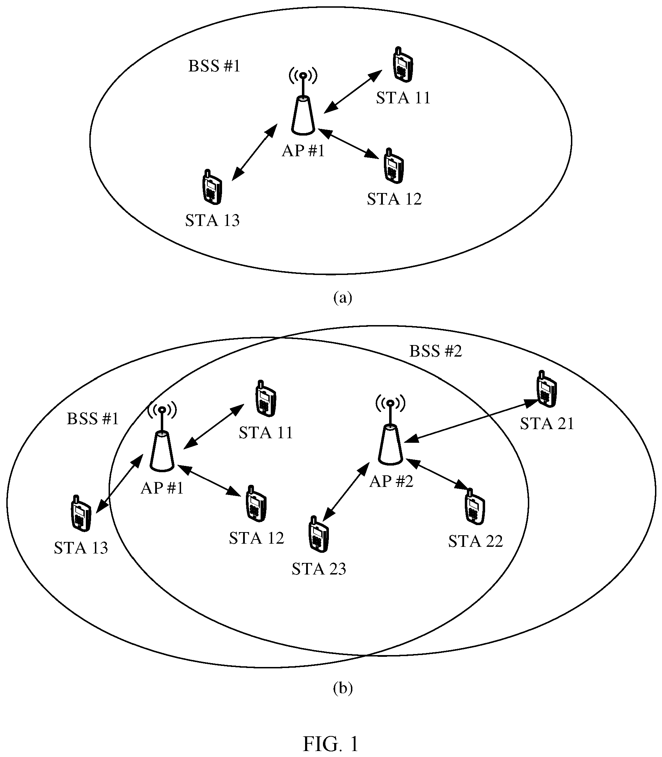

FIG. 1 is a diagram of a network architecture of a wireless local area network to which an embodiment of this application is applicable. As shown in (a) in FIG. 1, one BSS may include one AP and one or more STAs associated with the AP. The network architecture of the wireless local area network may further include a plurality of BSSs, for example, as shown in (b) in FIG. 1. The figure shows two BSSs, and the two BSSs partially overlap. An overlapped part is an OBSS. The BSS #1 includes an AP #1, a STA 11, a STA 12, and a STA 13, and the BSS #2 includes an AP #2, a STA 21, a STA 22, and a STA 23. The STA 11, the STA 12, the STA 22, and the STA 23 are mutually overlapping parts of the two BSSs. Each BSS includes one AP and a plurality of STAs. In one BSS, data may be transmitted between an AP and each STA, and data may be transmitted between the plurality of STAs. The AP #1 and the AP #2 may also communicate with each other, and STAs included in the two BSSs may also communicate with each other.

It should be understood that FIG. 1 is merely an example and should not constitute a limitation on a network architecture of a wireless local area network to which this application is applicable. For example, the network architecture may alternatively include more BSSs, each BSS may alternatively include more STAs, or some BSSs may alternatively not include an AP. An area in which a plurality of BSSs overlap may alternatively include more STAs, or the like. This is not limited herein in embodiments of this application.

For ease of understanding embodiments of this application, the following first describes several nouns or terms in this application.
1. Multi-link communication: A next-generation WLAN standard develops and evolves towards continuously improving a throughput. A WLAN system standard is mainly studied and discussed in the IEEE 802.11 standard working group. Based on the previous standard protocol 802.11a/b/g/n/ac/ax, a next-generation standard 802.11be uses an extremely high throughput (extremely high throughput, EHT) as a technical goal. One of existing key technologies is multi-link (multi-link) communication. A core idea of multi-link communication is that a WLAN device, namely, an EHT device, that supports a next-generation IEEE 802.11 standard has capabilities of sending and receiving on a plurality of frequency bands, so that a larger bandwidth can be used for transmission. This further improves a throughput. The plurality of frequency bands mainly includes but is not limited to a 2.4 GHz Wi-Fi frequency band, a 5 GHz Wi-Fi frequency band, and a 6 GHz Wi-Fi frequency band. One link means access and transmission are performed on each frequency band, and multi-link means access and transmission are performed on a plurality of frequency bands. Currently, a multi-link device (multi-link device, MLD) has been defined in 802.11be, to be specific, the multi-link device is a device that supports multi-link communication.

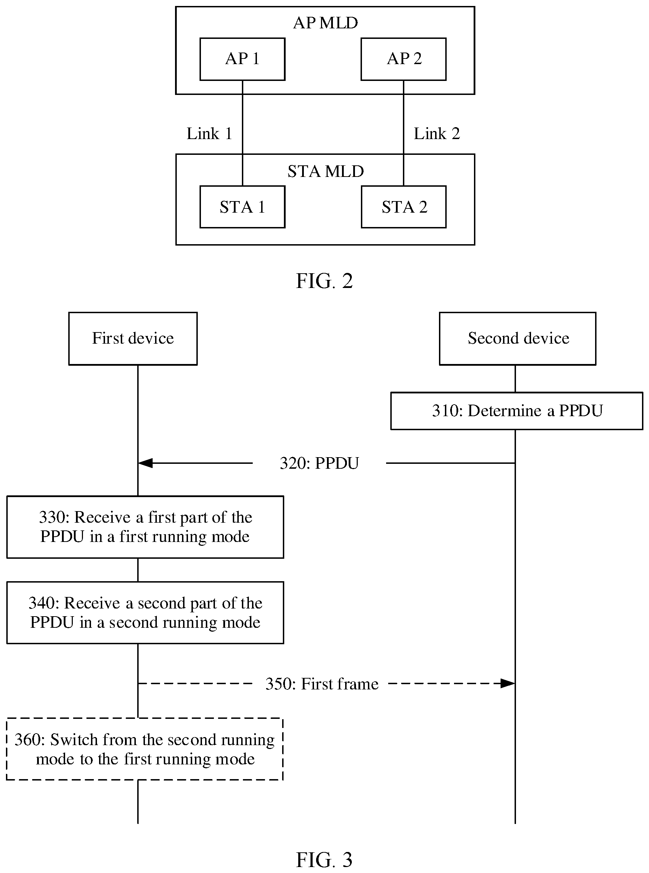

   FIG. 2 is a diagram of a simple multi-link communication scenario. FIG. 2 includes one AP MLD and one STA MLD. The AP MLD may include a plurality of access points (access points, APs), for example, an AP 1 and an AP 2, and the STA MLD may include a plurality of stations (stations, STAs), for example, a STA 1 and a STA 1. For example, a link 1 and a link 2 in FIG. 2 form two links, and communication between the AP MLD device and the STA MLD device on the link 1 and the link 2 may be referred to as multi-link communication.
2. LP listening mode: The STA listens to a channel in low power consumption mode (for example, using a small bandwidth or a low MCS).
3. STA type: The STA type includes an LP STA, a non-LP (non-LP) STA, and a legacy (Legacy) STA. The LP STA is a STA that supports an LP listening mode and currently operates in an LP mode, the non-LP STA is a STA that supports an LP listening mode and currently does not operate in an LP mode, and the legacy STA is a STA that does not support an LP listening mode.

The following describes the method provided in this application in detail with reference to the accompanying drawings.

FIG. 3 is a schematic block diagram of a communication method according to an embodiment of this application. For example, in FIG. 3, a first device is a STA, and a second device is an AP.

S310: The second device determines a PPDU.

The PPDU includes a first signal field (signal field, SIG) symbol set and a first symbol set, one SIG symbol in the first SIG symbol set includes an identifier of the first device, and the first symbol set is used to provide switching time for the first device to switch from a first running mode to a second running mode.

In a possible implementation, the first symbol set is located after the first SIG symbol set.

In this embodiment, a function of the first symbol set may be understood as that the first symbol set is used to switch the first device from the first running mode to the second running mode.

It should be understood that, the first running mode and the second running mode are running modes whose performance is partially or completely different. For example, a channel bandwidth of the first running mode is less than a channel bandwidth of the second running mode. Due to a difference between the two different running modes, if the STA needs to switch the running mode to receive data, sufficient time needs to be reserved for switching before the data is received. Therefore, in this application, the first symbol set is added to the PPDU, and the symbol set can enable the STA to have sufficient time to switch the running mode.

It may be understood that the first device may have a plurality of running modes, and any two running modes between the plurality of running modes may be switched based on the first symbol set in the PPDU.

Optionally, the first symbol set includes L symbols, L is a positive integer, and duration of each of the L symbols is first duration. For example, the first duration is 4 µs.

It may be understood that L is determined based on a first switching parameter, and the first switching parameter indicates the switching time for the first device to switch from the first running mode to the second running mode. Duration of the first symbol set is greater than or equal to the first switching parameter, or the first switching parameter is a quantity of symbols included in the first symbol set.

Optionally, the first switching parameter is specific duration, or the first switching parameter is a value L. For example, when the switching time configured by the second device for the first device to switch from the first running mode to the second running mode is 100 µs, and the first switching parameter may be set to 100 µs; or it is assumed that the first duration is 4 µs, the first switching parameter may be set to a value 25.

For example, the first switching parameter may be predefined, or may be indicated by the first device to the second device. This is not specifically limited in this application.

Optionally, each symbol in the first symbol set is a random sequence. For example, each symbol in the first symbol set is a random sequence of a specified time length, for example, a Golay sequence used in an STF or an LTF. For another example, each symbol in the first symbol set may be a symbol that carries valid information (such as a running mode parameter) and that is agreed upon by the first device and the second device.

Optionally, each symbol in the first symbol set corresponds to one SIG symbol, in other words, the first symbol set may be a second SIG symbol set.

It should be noted that modulation schemes corresponding to the first SIG symbol set and the first symbol set are the same.

For ease of description, an example in which a frame structure of a PPDU is a frame structure of an EHT PPDU in Wi-Fi 7, the first running mode is an LP listening mode (an LP mode for short below), and the second running mode is an HP receiving mode (an HP mode for short below) is used for description herein. The HP mode means that the STA receives data in a high power consumption mode (for example, at a large bandwidth or a high MCS). In a switching scenario of this example, the switching time for the first device to switch from the LP mode to the HP mode is time for the first device to stably switch from the LP mode to the HP mode, and the time includes but is not limited to phase-locked loop (phase-locked loop, PLL) stabilization time.

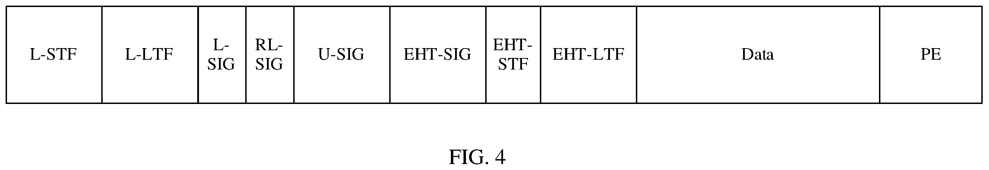

FIG. 4 is a diagram of a frame structure of an EHT PPDU. The frame structure of the EHT PPDU is formed by a preamble part and protocol-related long and short estimation training fields, data (Data), and a packet extension (packet extension, PE). The preamble part includes a legacy short training sequence (Legacy Short Training Field, L-STF), a legacy long training sequence (Legacy Long Training Field, L-LTF), a legacy signaling symbol (Legacy Signal Field, L-SIG), a repeated legacy signaling symbol (repeat Legacy Signal Field, RL-SIG), and a protocol-related signal field such as a U-SIG symbol or an EHT-SIG symbol. The protocol-related long and short estimation training fields include an EHT-STF and an EHT-LTF, which are respectively used for automatic gain control (automatic gain control, AGC) and channel estimation to demodulate a data part. The U-SIG symbol includes a number of EHT-SIG symbols field, and the field indicates a quantity of EHT-SIG symbols included in the EHT PPDU. It should be noted that the EHT PPDU in FIG. 4 may include a maximum of 32 EHT-SIG symbols. FIG. 4 shows only an example of one EHT-SIG symbol.

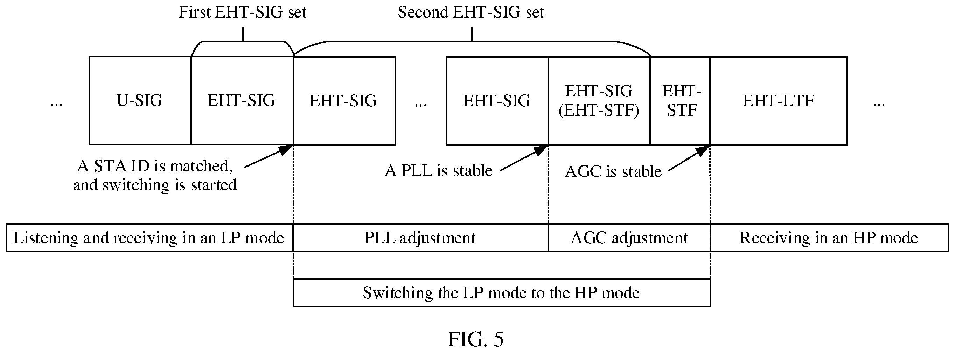

FIG. 5 is a diagram of a frame structure of a new EHT PPDU according to this application. It may be understood that the first SIG symbol set in this application is a first EHT-SIG symbol set in FIG. 5, and the first symbol set may be a second EHT-SIG symbol set in FIG. 5. That is, the first EHT-SIG symbol set is a set of EHT-SIG symbols included in the PPDU in FIG. 4, and the second EHT-SIG symbol set is a set of EHT-SIG symbols added to the PPDU in FIG. 5 on the basis of the PPDU in FIG. 4. The first EHT-SIG symbol set and the second EHT-SIG symbol set each include at least one EHT-SIG symbol.

As shown in FIG. 5, the second EHT-SIG symbol set is used to provide switching time for the first device to switch from the LP mode to the HP mode, and the time includes but is not limited to PLL adjustment time. An EHT-STF is used to perform AGC adjustment when the first device switches from the LP mode to the HP mode. Optionally, a last EHT-SIG symbol in the second EHT-SIG symbol set may be configured as a copy of the EHT-STF, to ensure that there is sufficient adjustment time for AGC after the PLL is stable, to ensure that AGC is stable.

It should be noted that, for example, the second EHT-SIG symbol set in FIG. 5 is placed after the first EHT-SIG symbol set. For example, the second EHT-SIG symbol set may alternatively be located after the EHT-STF and before the EHT-LTF. This is not specifically limited in this application.

It should be understood that the second EHT-SIG symbol set is only a possible specific implementation of the first symbol set added to the EHT PPDU. A specific implementation of the first symbol set is not limited in this application.

It should be further noted that a user domain of each EHT-SIG symbol in the first EHT-SIG symbol set and the second EHT-SIG symbol set includes one STA identifier. The identifier in the user domain of each EHT-SIG symbol in the first EHT-SIG symbol set is an identifier of a STA associated with the AP, so that after receiving the first EHT-SIG symbol set, the STA associated with the AP determines whether the PPDU includes data sent to the STA. However, the identifier in the user domain of each EHT-SIG symbol in the second EHT-SIG symbol set needs to be different from an identifier of any device in devices associated with the second device, to prevent the device associated with the second device from incorrectly detecting information about the EHT-SIG symbol in the second EHT-SIG symbol set.

It should be further noted that, when the PPDU is a multi-user PPDU, that is, when the first EHT-SIG symbol set includes identifiers of a plurality of STAs using the LP mode, each STA in the plurality of STAs corresponds to one first switching parameter, and the first switching parameter is a largest value of the switching parameters of the plurality of devices.

Optionally, the PPDU includes information #1, and the information #1 indicates a quantity of EHT-SIG symbols included in the first EHT-SIG symbol set and the second EHT-SIG symbol set.

Optionally, the EHT PPDU may further include information #2, and the information #2 indicates a quantity of EHT-SIG symbols included in the first EHT-SIG symbol set. The indication of the information #2 can effectively avoid demodulation overheads of the STA for the second EHT-SIG symbol set. The reason is as follows: Because a user domain of each EHT-SIG symbol in the first EHT-SIG symbol set and the second EHT-SIG symbol set includes an identifier (namely, a STA-ID), if the PPDU does not include information #2, after STA receives the PPDU, if the STA detects no STA-ID that matches the STA in the first EHT-SIG symbol set, the STA demodulates each EHT-SIG symbol in the second EHT-SIG symbol set, it can be learned from the foregoing that the second EHT-SIG symbol set is used only for mode switching, and each EHT-SIG symbol in the second EHT-SIG symbol set definitely does not include a STA-ID that matches the STA. Therefore, overheads are increased when the STA demodulates the second EHT-SIG symbol set. However, the AP notifies the STA of information #2 by using the PPDU, and the STA knows a total quantity of EHT-SIG symbols in the PPDU and a quantity of first EHT-SIG symbol sets. In this case, a position of the second EHT-SIG symbol set may be known, and an EHT-SIG symbol in the second EHT-SIG symbol set is not demodulated. This effectively avoids demodulation overheads of the STA.

It should be noted that, it is specified in the existing protocol that the quantity of EHT-SIG symbols in the PPDU does not exceed a first threshold, that is, the first threshold is a maximum quantity of EHT-EHT-SIG symbols that can be included in the PPDU and that is specified in the current protocol. However, in this application, after the second EHT-SIG symbol set is added, a quantity of EHT-SIG symbols in the PPDU may exceed the first threshold. The following provides two possible indication manners of the information #1.

### Manner 1

The PPDU includes a U-SIG symbol, the U-SIG symbol includes information #3, and the information #3 indicates whether a total quantity of EHT-SIG symbols in the first EHT-SIG symbol set and the second EHT-SIG symbol set exceeds the first threshold.

When the total quantity of EHT-SIG symbols in the first EHT-SIG symbol set and the second EHT-SIG symbol set is less than or equal to the first threshold, a first field in the U-SIG symbol indicates the total quantity of EHT-SIG symbols in the first EHT-SIG symbol set and the second EHT-SIG symbol set.

When the total quantity of EHT-SIG symbols in the first EHT-SIG symbol set and the second EHT-SIG symbol set is greater than the first threshold, the first field in the U-SIG symbol indicates a quantity of EHT-SIG symbols that exceeds the first threshold.

### Manner 2

When the total quantity of EHT-SIG symbols in the first EHT-SIG symbol set and the second EHT-SIG symbol set is less than or equal to the first threshold, a first field in the U-SIG symbol indicates the total quantity of EHT-SIG symbols in the first EHT-SIG symbol set and the second EHT-SIG symbol set.

When the total quantity of EHT-SIG symbols in the first EHT-SIG symbol set and the second EHT-SIG symbol set is greater than the first threshold, a bit width of the U-SIG symbol is extended (that is, a quantity of bits of the first field in the U-SIG symbol is increased), to meet a requirement for indicating the total quantity of EHT-SIG symbols in the first EHT-SIG symbol set and the second EHT-SIG symbol set.

It can be learned that, a difference between the manner 1 and the manner 2 lies in that the information #3 is not added in the manner.

With reference to the EHT PPDU in FIG. 5, the following provides possible specific implementations of the manner 1 and the manner 2 corresponding to information #1.

### Example of the manner 1

When the total quantity of EHT-SIG symbols included in the EHT PPDU (the total quantity of EHT-SIG symbols in the first EHT-SIG symbol set and the second EHT-SIG symbol set) is less than or equal to 32 (that is, an example of the first threshold), a number of EHT-SIG symbols symbols field (namely, an example of the first field) in the U-SIG symbol indicates the total quantity of EHT-SIG symbols in the PPDU. When the total quantity of EHT-SIG symbols included in the EHT PPDU is greater than 32, the number of EHT-SIG symbols symbols field in the U-SIG symbol indicates the total quantity of EHT-SIG symbols in the PPDU, any bit in the disregard field (occupying the 20^{th}-24^{th} bits of the U-SIG symbol, B20-B24 for short below) in the U-SIG symbol may be modified into the extended number of EHT-SIG symbols symbols field (namely, an example of the information #3), and the extended number of EHT-SIG symbols symbols field indicates whether the total quantity of EHT-SIG symbols in the EHT PPDU exceeds 32. In this case, the number of EHT-SIG symbols symbols field in the U-SIG symbols indicates a quantity of EHT-SIG symbols that exceeds 32 in the PPDU.

It should be noted that, in the 802.11be protocol, B20-B24 of the disregard field are usually set to 1, and the STA ignores the field in a demodulation process. Therefore, when the total quantity of EHT-SIG symbols in the PPDU exceeds 32, a bit corresponding to the extended number of EHT-SIG symbols symbols field in the disregard field may be set to 0, and the number of EHT-SIG symbols symbols field is set to (m-32-1).

It should be understood that, when the extended number of EHT-SIG symbols symbols field is set to 0, payload of the EHT PPDU includes only data of a STA (an LP STA and/or a non-LP STA) supporting an LP mode, that is, when the total quantity of symbols of the EHT-SIG symbols in the EHT PPDU exceeds 32, the EHT PPDU cannot simultaneously transmit data of the STA supporting the LP mode and data of a legacy STA. The reason is as follows: Because the legacy STA cannot identify the extended number of EHT-SIG symbols symbols field, the legacy STA cannot correctly interpret a meaning of the number of EHT-SIG symbols symbols field, and consequently misses detecting some EHT-SIG symbols in the first EHT-SIG symbol set.

Optionally, a meaning of the remaining 4 bits of the disregard field in the U-SIG symbol may be modified, that is, a 4-bit number of non-padding EHT-SIG symbols symbols field is newly added, to indicate the quantity of EHT-SIG symbols in the first EHT-SIG symbol set.

The following uses an example in which B20 in the disregard field is modified to an extended number of EHT-SIG symbols symbols field, and B21-B24 are modified to a number of non-padding EHT-SIG symbols symbols field to describe configurations of the second EHT-SIG symbol set and the disregard field in the PPDU when the PPDU carries data of different types of STAs.

Scenario 1: The EHT PPDU includes only data of the LP STA, data of the non-LP STA, or data of the legacy STA.
1. When the EHT PPDU includes only data of the LP STA, the number of EHT-SIG symbols symbols field, the extended number of EHT-SIG symbols symbols field, and the number of non-padding EHT-SIG symbols symbols field of the U-SIG symbol are correspondingly configured.

When the non-LP STA detects the EHT PPDU including the second EHT-SIG symbol set, the non-LP STA demodulates the current EHT PPDU based on the number of non-padding EHT-SIG symbols symbols field of the U-SIG symbol.

When the legacy STA detects the EHT PPDU including the second EHT-SIG symbol set, if the legacy STA identifies that B20-B24 of the U-SIG symbol are not all 1s, the legacy STA considers that an error may occur in transmission of the data frame, and stops demodulating the current PPDU, or the legacy STA does not identify B20-B24 in the U-SIG symbol, the legacy STA demodulates the current EHT PPDU based on the number of EHT-SIG symbols symbols field of the U-SIG symbol.

2. When the EHT PPDU includes only data of the non-LP STA, the extended number of EHT-SIG symbols symbols field (B20) of the U-SIG symbol is set to 1, and the number of non-padding EHT-SIG symbols field (B21-B24) is set to a value of a number of EHT-SIG symbols symbols field, and the EHT PPDU does not include the second EHT-SIG symbol set.

3. When the EHT PPDU includes only legacy STA data, B20-B24 of the U-SIG symbol are set to all 1s, and the EHT PPDU does not include the second EHT-SIG symbol set.

Scenario 2: The EHT PPDU includes data of both the LP STA and the non-LP STA, and does not include data of the legacy STA.

The EHT PPDU includes the second EHT-SIG symbol set, and duration of the second EHT-SIG symbol set should satisfy longest time for switching from LP modes to HP modes of all LP STAs included in the current EHT PPDU, and the number of EHT-SIG symbols symbols field, the extended number of EHT-SIG symbols symbols field, and the number of non-padding EHT-SIG symbols symbols field of the U-SIG symbol are correspondingly configured.

When the non-LP STA detects the EHT PPDU including the second EHT-SIG symbol set, the non-LP STA demodulates the current EHT PPDU based on the number of non-padding EHT-SIG symbols symbols field of the U-SIG symbol.

Scenario 3: The EHT PPDU includes data of the LP STA, data of the non-LP STA, and data of the legacy STA.

In this scenario, a meaning of the disregard field in the U-SIG symbol field does not need to be changed, to prevent legacy devices of some vendors from stopping demodulation when detecting that disregard fields are not all 1s.

### Example of the manner 2

When the total quantity of EHT-SIG symbols in the EHT PPDU exceeds 32, a bit width of the U-SIG symbol may be extended, and includes adding a bit width of a number of EHT-SIG symbols symbols field and a bit width of a disregard field, which respectively indicate the total quantity of EHT-SIG symbols in the PPDU and the total quantity of EHT-SIG symbols in the second EHT-SIG symbol set. It should be understood that the disregard field in this manner does not need to be used to extend the extended number of EHT-SIG symbols symbols field.

S320: The second device sends the PPDU to the first device using the LP mode.

In a possible scenario, to reduce power consumption, the STA in the LP mode performs low power consumption listening on only a 20 MHz channel bandwidth. When the STA detects a data frame delivered by the AP, the STA receives and demodulates the EHT-SIG symbol only on the primary 20 MHz channel. To obtain all information about the STA indicated by the EHT-SIG symbol in the first EHT-SIG symbol set, the AP needs to be restricted to allocate, on the primary 20 MHz channel, all resource units (resource units, RUs) corresponding to a user specific field corresponding to the EHT-SIG symbol in the first EHT-SIG symbol set. The following provides several possible implementations.

### Implementation 1:

When the channel bandwidth of the STA in the LP mode is 20 MHz, the AP allocates, on the primary 20 MHz channel by default, all the RUs corresponding to the user specific field in the first EHT-SIG symbol set, and the STA needs to receive and demodulate the EHT-SIG symbol only on the primary 20 MHz channel by default.

### Implementation 2:

A meaning of the PHY version identifier (B0-B2) field in the U-SIG symbol is modified, and any undefined or unused value indicates an RU allocation constraint of the first EHT-SIG symbol set. For example, a value 2 is used as an example. When a PHY version identifier field in the U-SIG symbol is set to 2, it indicates that the primary 20 MHz channel includes all the RUs corresponding to the user specific field in the EHT-SIG symbol, and the STA determines, based on the value 2, that the EHT-SIG symbol needs to be received and demodulated only on the primary 20 MHz channel.

### Implementation 3:

When the channel bandwidth of the STA in the LP mode is 20 MHz, an RU allocation scheme of the first EHT-SIG symbol set is restricted, that is, all the RUs corresponding to the user specific field in the EHT-SIG symbol are restricted to be placed only in the EHT-SIG symbol content channel 1, that is, the EHT-SIG symbol content channel 2 does not include the user specific field.

S330: The first device receives a first part of the PPDU from the second device in the LP mode.

The first part includes a first SIG symbol set and a first symbol set. For information included in the first part, refer to the description in S310. Details are not described herein again.

S340: The first device receives a second part of the PPDU in the second running mode.

For example, when the PPDU is the EHT PPDU, the second part includes data and/or the EHT-LTF.

Specifically, in this step, when the first device determines that the first SIG symbol set includes the identifier of the first device, the first device switches from the first running mode to the second running mode in duration of the first symbol set. After switching succeeds, the first device receives the second part of the PPDU in the second running mode.

For example, the first device starts to switch the running mode after the first device detects the identifier of the first device, or may start to switch the running mode at a start position of the first symbol set. This is not limited in this application.

It should be noted that, if a physical layer parameter of the first running mode is the same as that of the second running mode, even if the first symbol set is configured, the first device does not need to perform switching.

The foregoing describes in detail a process of implementing running mode switching when the first device receives a data frame. For example, when the first running mode is an LP mode, and the second running mode is an LP mode, the STA uses the LP mode to perform listening. When the AP needs to send a data frame to the STA using the LP mode, the AP adds the first symbol set to the data frame to provide sufficient time for switching from the LP mode to the HP mode for the STA, to ensure that the STA has stably operated in the HP mode before receiving data.

In a possible scenario, after receiving the PPDU, the first device using the second running mode may return to the first running mode. For example, after the first device using the LP mode receives the PPDU, to reduce power consumption of the device, the first device may return to the LP mode for listening.

In this case, optionally, the method may further include S350 and S360.

S350: The first device sends a first frame to the second device, where the first frame indicates that the first device has successfully received the PPDU. Correspondingly, the second device receives the first frame from the first device.

For example, the first frame is an ACK frame.

It should be understood that, after receiving the first frame, the second device determines that the first device starts to switch from the second running mode to the first running mode after the first duration.

For example, the first duration is equal to 0 or the first duration is greater than 0.

For example, the first device indicates the first duration to the second device, or the first duration is predefined.

It should be noted that the second device cannot send a data frame in a first time period in which the first device switches from the second running mode to the first running mode. The first time period is determined based on a second switching parameter, and the second switching parameter indicates switching time for the first device to switch from the second running mode to the first running mode. For a specific form of the second switching parameter, refer to the description of the first switching parameter. Details are not described herein again.

Optionally, the second switching parameter may be predefined, or may be indicated by the first device to the second device. This is not specifically limited in this application.

Optionally, when the first device is a first device having at least two PLLs, the first device may have a plurality of groups of switching parameters on one link, where each group of parameters in the plurality of groups of switching parameters includes switching time for one first device to switch from the LP mode to the HP mode and switching time for one first device to switch from the HP mode to the LP mode, and one of the plurality of groups of switching parameters includes the first switching parameter and the second switching parameter. Compared with a first device having only one PLL, switching time of a running mode of a first device having at least one PLL may be greatly shortened. A reason is as follows: For a first device having at least two PLLs, both a first running mode and a second running mode may be configured. Therefore, during mode switching, the first device does not need to reconfigure the other running mode, and can quickly switch from one running mode to the other running mode. Therefore, compared with a first device having only one PLL, the first device having at least two PLLs can greatly shorten switching time of a running mode.

S360: The first device switches from the second running mode to the first running mode.

Optionally, when the first switching parameter and/or the second switching parameter are/is indicated by the first device to the second device, the method may further include S370.

S370: The first device sends a second frame to the second device, where the second frame includes N groups of running mode parameters. Correspondingly, the second device receives the second frame from the first device.

It should be understood that N groups of related parameters of the LP mode one-to-one correspond to N links, the N links are communication links that use the LP mode and that are between the first device and the second device, and a first link used by the second device to send the EHT PPDU is one of the N links. In other words, multi-link communication of K links is supported between the first device and the second device, and the first device may report running mode parameters of N links in the K links to the second device. The N links include the first link, and K≥N≥1.

Each group of running mode parameters includes at least one of the following parameters: switching time for the first device to switch from the HP mode to the LP mode on a link corresponding to the parameter, and switching time for the first device to switch from the LP mode to the HP mode on the link corresponding to the parameter. It may be understood that a running mode parameter corresponding to the first link includes a first switching parameter and a second switching parameter.

Optionally, each group of running mode parameters may further include a channel bandwidth of the LP mode used by the first device on the link corresponding to the parameter.

In a possible specific implementation, the second frame is an association (Association) request frame, and an LP capability (LP Capabilities) element may be added to a frame body of the frame. The LP capabilities element includes an LP parameter information (LP Parameter Information) field, and the field indicates N groups of running mode parameters.

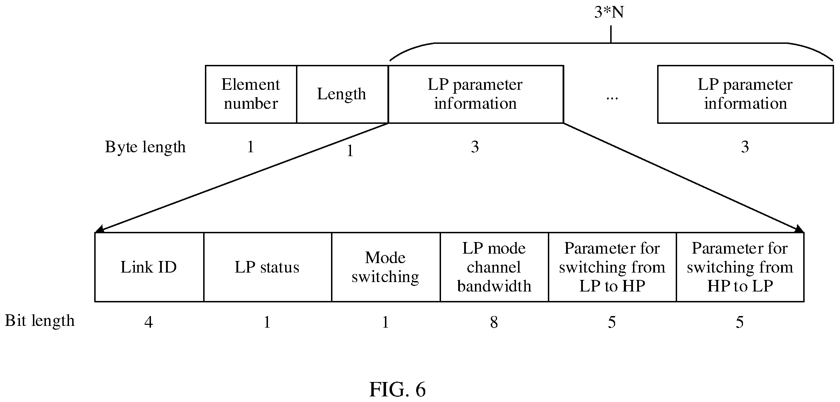

FIG. 6 is a diagram of a structure of an LP capabilities element according to this application. It should be understood that FIG. 6 includes N LP parameter information fields, and the N LP parameter information fields one-to-one correspond to N links. For a link that does not use or does not support an LP mode, the LP capabilities element does not have an LP parameter information field corresponding to the link. Meanings of subfields in the LP capabilities element and the LP parameter information (LP Parameter Information) field are as follows:

The meaning of an element ID (element ID) subfield is consistent with that in the current protocol, and the element ID subfield specifies an LP capabilities element corresponding to any unused element ID.

The meaning of a length (Length) subfield is consistent with that in the current protocol, and the length subfield indicates a total quantity of bytes in the current element except the element ID and length, namely, a total quantity of bytes in the LP parameter information field.

The meaning of a link ID (Link ID) subfield is consistent with that in the 802.11be protocol, and the link ID subfield indicates a link identifier.

An LP status (LP Status) subfield indicates whether a first device operates in the LP mode on a corresponding link. For example, when the LP status subfield is set to 1, it indicates that the first device currently operates in the LP mode. Otherwise, when the subfield is set to 0, it indicates that the first device currently does not operate in the LP mode.

A mode switch (Mode Switch) subfield indicates whether the first device requests, on a corresponding link, to switch a running mode with different power consumption. When the mode switch subfield is set to 1, it indicates that the first device currently requests to switch from the first mode to the second mode, where the first mode and the second mode each are one of the LP mode and an HP mode. Otherwise, the field is set to 0.

An LP mode channel bandwidth (LP Mode Channel Width) subfield indicates an LP mode channel bandwidth of the first device on a corresponding link.

An LP-to-HP switching parameter (LP to HP Transition Duration) subfield indicates a switching parameter (including PLL stabilization time, AGC adjustment time, and the like) for switching for the first device from the LP mode to the HP mode on a corresponding link. For example, when time for stably switching from the LP mode to the HP mode is 100 µs, in a unit of 4 µs, the field may be set to 25.

An HP-to-LP switching parameter (HP to LP Transition Duration) subfield indicates a switching parameter for switching from the HP mode to the LP mode on a link corresponding to the first device.

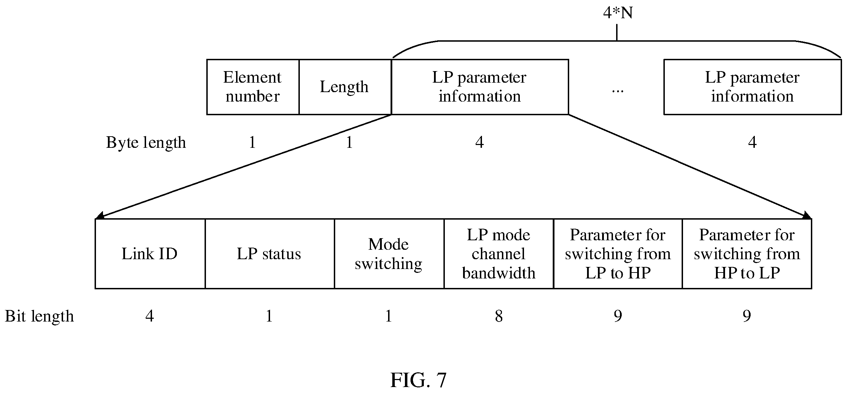

For a quantity of bytes or a quantity of bits occupied by the foregoing subfield, refer to marks in FIG. 6. Details are not described herein again. When switching time of the first device exceeds 128 µs, that is, when a value of the LP to HP transition duration subfield or the HP to LP transition duration subfield exceeds 32, a length of the LP parameter information field is allowed to be further extended, and a length of the LP capabilities element is correspondingly extended. A possible implementation solution is shown in FIG. 7. One LP parameter information field is extended to 4 bytes, and a value of the LP to HP transition duration subfield or the HP to LP transition duration subfield is extended to 8 bits (bits), that is, the first device can support maximum switching time of about 2 ms.

It should be understood that FIG. 6 and FIG. 7 only provide an example of a possible structure of the LP parameter information field. For example, the LP parameter information field may include all or some of the foregoing subfields, or may include a subfield corresponding to another LP mode parameter that may exist. This is not limited in this application.

Optionally, after receiving an (Re)association request frame, a second device may further send an (Re)association response frame to the first device. An LP capabilities element may also be newly added to a frame structure frame body of the (Re)association request. Details are not described herein again.

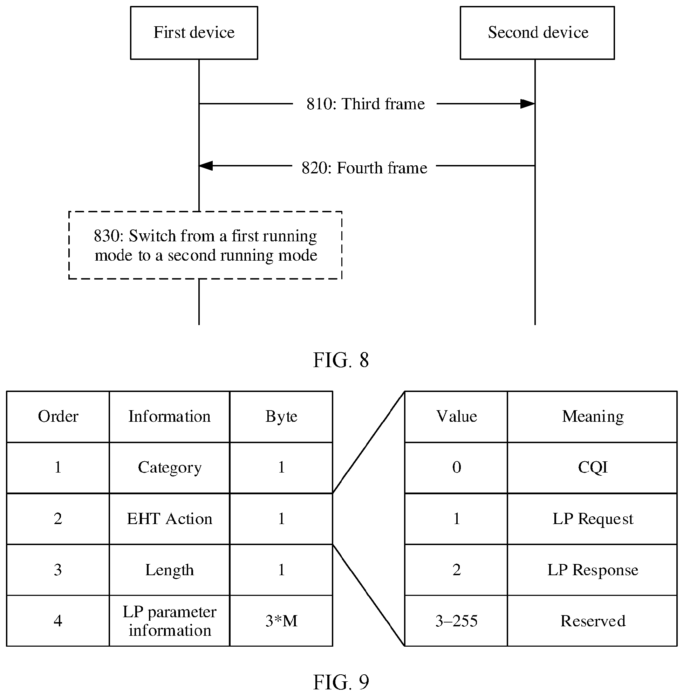

It may be understood that the foregoing procedure may be considered as that the STA using the first running mode automatically switches from the first running mode to the second running mode due to receiving data. In practice, the STA using the first running mode may also need to switch the running mode due to other reasons. Therefore, even if the STA using the first running mode does not receive data, the STA may also request the associated AP to perform mode switching. In this way, this application provides a method for dynamically switching a running mode. The following provides a description with reference to FIG. 8.

FIG. 8 is a diagram of dynamically requesting to switch a running mode according to this application. For example, a first device in FIG. 8 may be a STA, and a second device may be an AP. The method includes S810 to S830.

S810: The first device sends a third frame to the second device. Correspondingly, the second device receives the third frame from the first device.

The third frame includes a first state and a switching mode, the first state indicates that the first device is in a first running mode or a second running mode, and the switching mode is used to request whether to switch between the first running mode and the second running mode.

S820: The first device receives a fourth frame from the second device, where the fourth frame indicates whether switching between the first running mode and the second running mode is allowed.

For example, the first state in the third frame indicates that the first device is in the first running mode, the switching mode is used to request to perform mode switching, and the fourth frame indicates that switching is allowed. Optionally, the method further includes S830.

S830: The first device switches from the first running mode to the second running mode.

It should be understood that the first device may also switch from the second running mode to the first running mode by using the method in FIG. 8.

Based on the third frame and the fourth frame, an LP request (Request) frame and an LP response (Response) frame are introduced in this application. The third frame is the LP request frame that supports the first device in requesting the associated second device to enter the LP mode, and the fourth frame is the LP response frame that is used by the associated second device to respond to the first device request. The following provides two specific implementations of the LP request frame and the LP response frame.

### Manner 1

As shown in FIG. 9, an LP request indication and an LP response indication are newly added to an EHT action field of an existing EHT action frame. Specifically, an unused value (value) is selected from the EHT action field to indicate an LP request and an LP response. For example, in FIG. 9, a value range of the value of the EHT action field is 0-255. A value 0 indicates EHT compressed beamforming or a channel quality indicator (channel quality indicator, CQI), a value 1 indicates the LP request, a value 2 indicates the LP response, and values 3-255 are reserved bits. The EHT action frame further includes M LP parameter information fields. For the LP parameter information fields, refer to the description in FIG. 6. Details are not described herein again.

### Manner 2

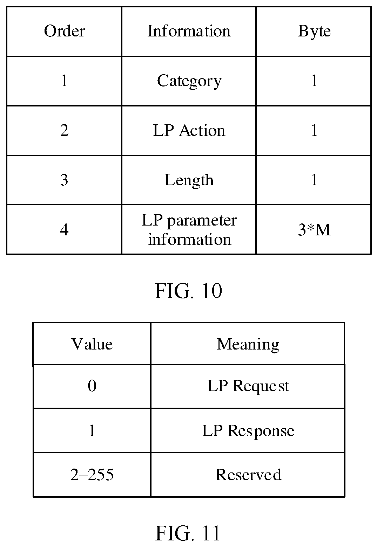

As shown in FIG. 10, any unused value (Code) is selected from a category (Category) field to indicate the LP action frame, and the LP action field of the LP action frame indicates the LP request and the LP response. For example, a value range of the value of the LP action field in FIG. 11 is 0-255. A value 0 indicates the LP request, a value 1 indicates the LP response, and values 2-255 are reserved bits. The LP action frame further includes M LP parameter information fields.

It should be understood that the M LP parameter information fields in the LP request frame and the LP response frame are running mode parameters corresponding to M links in the K links between the first device and the second device, and K≥M≥1.

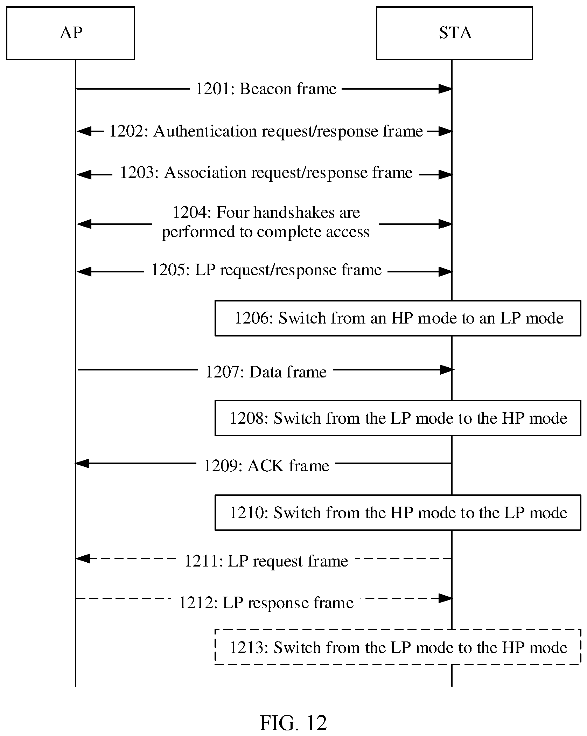

It should be understood that, if the STA supporting the LP mode needs to switch the running mode, the STA needs to access the AP supporting the LP mode to implement the foregoing procedure. In the foregoing embodiment of this application, the AP is the AP supporting the LP mode by default. In this case, before the STA and the AP implement the foregoing mode switching procedure, the STA and the AP further need to notify each other that the STA and the AP support the LP mode during initial access. For a possible specific notification manner, refer to descriptions of S1201 and S1202 in FIG. 12.

With reference to FIG. 12, the following provides an example of a complete implementation procedure of frame interaction for a STA to request switching between different running modes. For example, the STA requests switching between an LP mode and an HP mode. An initial running mode of the STA is the HP mode. The frame interaction process specifically includes the following steps.

S1201: An AP sends a beacon (Beacon) frame, and notifies a STA that receives the beacon frame that the AP supports the LP mode.

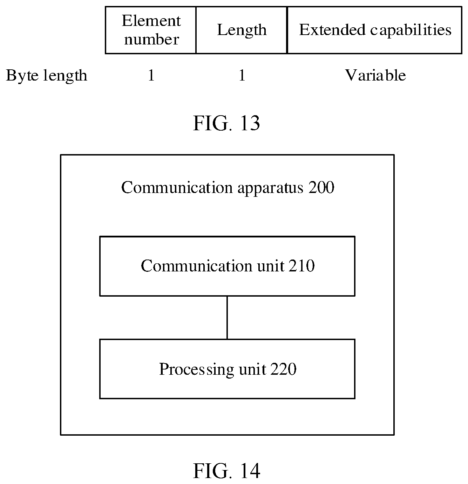

FIG. 13 is a diagram of a structure of an extended capability (Extended Capabilities) element in a beacon frame. In a possible implementation, a 1-bit LP mode support (or LP Support) field is newly added to an extended capabilities field of the extended capabilities element in a frame body of the beacon frame, to indicate whether the AP supports the LP mode. For example, if the LP mode support (or LP Support) field is set to 1, it indicates that the AP supports the LP mode; otherwise, the field is set to 0.

In another possible implementation, as shown in FIG. 13, any 1-bit reserved field (for example, a Bit 5 or a Bit 35) in the extended capabilities field is modified to the LP mode support (or LP Support) field.

S1202: When the STA detects the LP mode support=1 in the beacon frame, the STA learns that the AP supports the LP mode, and completes an authentication process by exchanging an authentication (Authentication) request/response frame between the STA and the AP.

S1203: The STA and the AP exchange an association (Association) request/response frame that carries the LP capabilities element. An LP status field is set to 1 (indicating that the STA is in the HP mode), a switch mode field is set to 0 (indicating that mode switching is not performed), and the LP to HP transition duration and the HP to LP transition duration subfields each are set to corresponding switching time, to complete the association process and report an LP mode capability of the STA.

S1204: After four interaction handshakes, the STA successfully accesses the AP.

S1205: The STA currently operates in the HP mode. To implement low power consumption listening, the STA may exchange the LP request/response frame with the AP, and the STA sets the LP status field in the LP request frame to 0 and sets the switch mode field to 1, to request to switch from the HP mode to the LP mode.

S1206: After the switching time from the HP mode to the LP mode, the STA stably operates in the LP mode and performs low power consumption listening.

S1207: The AP sends a data frame, where the data frame includes a first EHT-SIG symbol set and a second EHT-SIG symbol set.

For the first EHT-SIG symbol set and the second EHT-SIG symbol set, refer to the foregoing descriptions. Details are not described herein again.

S1208: When the STA detects the data frame delivered by the AP and a STA-ID included in a specific EHT-SIG symbol in the first EHT-SIG symbol set in the data frame matches the STA-ID of the STA, the STA starts to switch from the LP mode to the HP mode, and after switching time from the LP mode to the HP mode, the STA stably operates in the HP mode to receive data.

S1209: After receiving the data, the STA sends an ACK frame to the AP.

S1210: The STA starts to switch from the HP mode to the LP mode, and after the switching time from the HP mode to the LP mode, the STA stably operates in the LP mode, and continues to perform low power consumption listening.

It should be understood that the AP should allow to send a data frame to the STA only after the AP receives the ACK frame and after the switching time indicated by the HP to LP transition duration field.

Optionally, S1211: when the STA operates in the LP mode, the STA may send the LP request frame to the AP, set the LP status field in the LP request frame to 1, and set the switch mode field to 1, to request to switch from the LP mode to the HP mode.

S1212: The STA receives the LP response frame sent by the AP, and indicates the AP to perform switching for all STAs.

S1213: The STA starts to switch from the LP mode to the HP mode, and after the switching time from the LP mode to the HP mode, the STA stably operates in the HP mode.

It should be noted that, although this specification focuses on adding a first symbol set to the EHT PPDU in the Wi-Fi 7 protocol to implement switching between the LP mode and the LP mode of the STA, the method in this application may be applicable to various Wi-Fi protocols that can use the method in this application and various scenarios of switching between running modes of the first device.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, the method and the operation implemented by the device (such as the transmit end device or the receive end device) may also be implemented by a component (for example, a chip or a circuit) of the device.

The method provided in embodiments of this application is described above in detail with reference to FIG. 1 to FIG. 13. The foregoing methods are mainly described from a perspective of interaction between the transmit end device and the receive end device. It may be understood that, to implement the foregoing functions, the transmit end device and the receive end device include corresponding hardware structures and/or software modules for performing the functions.

A person skilled in the art should be able to be aware that, in combination with the examples described in embodiments disclosed in this specification, units and algorithm steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The communication apparatus provided in embodiments of this application is described below in detail with reference to FIG. 14 to FIG. 16. It should be understood that descriptions of apparatus embodiments correspond to the descriptions of the method embodiments. Therefore, for content that is not described in detail, refer to the foregoing method embodiments. For brevity, some content is not described again. In embodiments of this application, functional modules of a transmit end device or a receive end device may be obtained through division based on the foregoing method examples. For example, functional modules may be obtained through division based on functions, or two or more functions may be integrated into one processing module. The integrated module may be implemented in a form of hardware, or may be implemented in a form of a software functional module. It should be noted that module division in embodiments of this application is an example and is only logical function division. During actual implementation, another division manner may be used. Descriptions are provided below by using an example in which each functional module is obtained through division based on each corresponding function.

The foregoing describes in detail the data transmission method provided in this application, and the following describes communication apparatuses provided in this application. In a possible implementation, the apparatus is configured to implement the steps or procedures corresponding to the receive end device in the foregoing method embodiments. In another possible implementation, the apparatus is configured to implement the steps or procedures corresponding to the transmit end device in the foregoing method embodiments.

FIG. 14 is a schematic block diagram of a communication apparatus 200 according to an embodiment of this application. As shown in FIG. 14, the apparatus 200 may include a communication unit 210 and a processing unit 220. The communication unit 210 may communicate with the outside, and the processing unit 220 is configured to process data. The communication unit 210 may also be referred to as a communication interface or a transceiver unit.

In a possible design, the apparatus 200 may implement steps or procedures performed by the first device in the foregoing method embodiments. The processing unit 220 is configured to perform processing-related operations of the first device in the foregoing method embodiments, and the communication unit 210 is configured to perform sending-related operations of the first device in the foregoing method embodiments.

In another possible design, the apparatus 200 may implement the steps or procedures performed by the second device in the foregoing method embodiments. The communication unit 210 is configured to perform receiving-related operations of the second device in the foregoing method embodiments. The processing unit 220 is configured to perform processing-related operations of the second device in the foregoing method embodiments.

It should be understood that the apparatus 200 herein is embodied in a form of functional units. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate assembly that supports the described function. In an optional example, a person skilled in the art may understand that the apparatus 200 may be specifically the first device in the foregoing embodiments, and may be configured to perform the procedures and/or the steps corresponding to the first device in the foregoing method embodiments; or the apparatus 200 may be specifically the second device in the foregoing embodiments, and may be configured to perform the procedures and/or the steps corresponding to the second device in the foregoing method embodiments. To avoid repetition, details are not described herein again.

The apparatus 200 in the foregoing solutions has a function of implementing corresponding steps performed by the first device in the foregoing methods, or the apparatus 200 in the foregoing solutions has a function of implementing corresponding steps performed by the second device in the foregoing methods. The function may be implemented by hardware, or may be implemented by hardware executing corresponding software. The hardware or software includes one or more modules corresponding to the foregoing functions. For example, the communication unit may be replaced by a transceiver (for example, a sending unit in the communication unit may be replaced by a transmitter, and a receiving unit in the communication unit may be replaced by a receiver), and another unit, for example, the processing unit may be replaced by a processor, to separately perform a sending and receiving operation and a related processing operation in each method embodiment.

In addition, alternatively, the communication unit may be a transceiver circuit (for example, may include a receiving circuit and a sending circuit), and the processing unit may be a processing circuit. In this embodiment of this application, the apparatus in FIG. 14 may be the AP or the STA in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

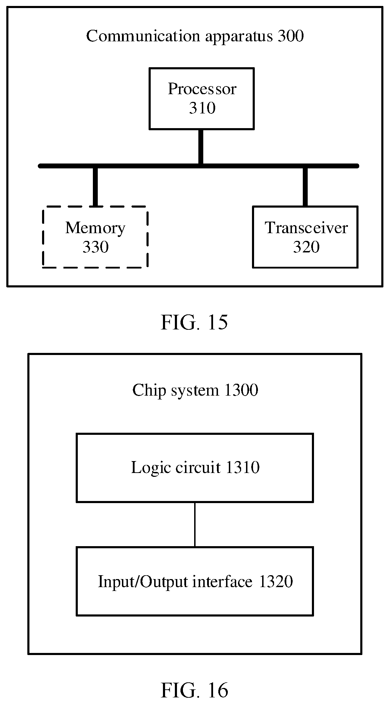

FIG. 15 is a schematic block diagram of a communication apparatus 300 according to an embodiment of this application. The apparatus 300 includes a processor 310 and a transceiver 320. The processor 310 and the transceiver 320 communicate with each other through an internal connection path, and the processor 310 is configured to execute instructions, to control the transceiver 320 to send a signal and/or receive a signal.

Optionally, the apparatus 300 may further include a memory 330. The memory 330 communicates with the processor 310 and the transceiver 320 through an internal connection path. The memory 330 is configured to store instructions, and the processor 310 may execute the instructions stored in the memory 330. In a possible implementation, the apparatus 300 is configured to implement procedures and steps corresponding to the first device in the foregoing method embodiments. In another possible implementation, the apparatus 300 is configured to implement procedures and steps corresponding to the second device in the foregoing method embodiments.

It should be understood that the apparatus 300 may be specifically the first device or the second device in the foregoing embodiments, or may be a chip or a chip system. Correspondingly, the transceiver 320 may be a transceiver circuit of the chip. This is not limited herein. Specifically, the apparatus 300 may be configured to perform steps and/or procedures corresponding to the first device or the second device in the foregoing method embodiments. Optionally, the memory 330 may include a read-only memory and a random access memory, and provide instructions and data for the processor. A part of the memory may further include a non-volatile random access memory. For example, the memory may further store information of a device type. The processor 310 may be configured to execute the instructions stored in the memory, and when the processor 310 executes the instructions stored in the memory, the processor 310 is configured to perform the steps and/or procedures corresponding to the first device or the second device in the method embodiments.

In an implementation process, steps in the foregoing methods can be implemented by using a hardware integrated logical circuit in the processor, or by using instructions in a form of software. The steps in the methods disclosed with reference to embodiments of this application may be directly performed and completed by a hardware processor, or may be performed and completed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware assembly. The processor in embodiments of this application may implement or perform the methods, the steps, and the logical block diagrams that are disclosed in embodiments of this application. The general-purpose processor may be a microprocessor, the processor may be any conventional processor, or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another appropriate type.

It should be noted that when the processor is a general-purpose processor, a DSP, an ASIC, an FPGA or another programmable logic device, a discrete gate or a transistor logic device, or a discrete hardware assembly, a memory (storage module) may be integrated into the processor. It should further be noted that the memory described herein is intended to include, but is not limited to, these and any other appropriate type of memory.

FIG. 16 is a diagram of a chip system 1300 according to an embodiment of this application. The chip system 1300 (or may also be referred to as a processing system) includes a logic circuit 1310 and an input/output interface (input/output interface) 1320.

The logic circuit 1310 may be a processing circuit in the chip system 1300. The logic circuit 1310 may be coupled to and connected to a storage unit, and invoke instructions in the storage unit, to enable the chip system 1300 to implement the methods and functions in embodiments of this application. The input/output interface 1320 may be an input/output circuit in the chip system 1300, and outputs information processed by the chip system 1300, or inputs to-be-processed data or signaling into the chip system 1300 for processing.

Specifically, for example, if the chip system 1300 is mounted on a first device, the logic circuit 1310 is coupled to the input/output interface 1320, the logic circuit 1310 may send a second frame through the input/output interface 1320, and the second frame may be generated by the logic circuit 1310. For another example, if the chip system 1300 is mounted on a second device, the logic circuit 1310 is coupled to the input/output interface 1320, the logic circuit 1310 may receive the second frame through the input/output interface 1320, and the logic circuit 1320 determines, based on a first switching parameter in a first frame, a quantity of symbols included in a first symbol set.

In a solution, the chip system 1300 is configured to implement an operation performed by the first device in the foregoing method embodiments.

For example, the logic circuit 1310 is configured to implement a processing-related operation performed by the first device in the foregoing method embodiments, for example, a processing-related operation performed by the first device in the embodiment shown in FIG. 3 or FIG. 8. The input/output interface 1320 is configured to implement an operation related to sending and/or receiving performed by the first device in the foregoing method embodiments, for example, a processing-related operation performed by the first device in the embodiment shown in FIG. 3 or FIG. 8.

In another solution, the chip system 1300 is configured to implement an operation performed by the second device in the foregoing method embodiments.

For example, the logic circuit 1310 is configured to implement a processing-related operation performed by the second device in the foregoing method embodiments, for example, a processing-related operation performed by the second device in the embodiment shown in FIG. 3 or FIG. 8. The input/output interface 1320 is configured to implement an operation related to sending and/or receiving performed by the second device in the foregoing method embodiments, for example, a processing-related operation performed by the second device in the embodiment shown in FIG. 3 or FIG. 8.

In addition, this application further provides a computer-readable storage medium. The computer-readable storage medium stores computer instructions, and when the computer instructions are run on a computer, the operations and/or the procedures performed by the first device or the second device in the method embodiments of this application are performed.

This application further provides a computer program product. The computer program product includes computer program code or instructions, and when the computer program code or the instructions are run on a computer, the operations and/or the procedures performed by the first device or the second device in the method embodiments of this application are performed.

In addition, this application further provides a communication system. The communication system includes the first device and the second device in embodiments of this application.

It should further be noted that the memory described herein is intended to include, but is not limited to, these and any other appropriate type of memory.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is only an example. For example, division into the units is only logical function division and may be other division in actual implementation. For example, a plurality of units or assemblies may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be further understood that, ordinal numbers such as "first" and "second" in embodiments of this application are used to distinguish between a plurality of objects, but are not intended to limit sizes, content, a sequence, a time sequence, priorities, importance degrees, or the like of the plurality of objects. For example, first information and second information do not indicate a difference in an information amount, content, a priority, an importance degree, or the like.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that, in this application, "at least one" means one or more, and "a plurality of" means two or more. "At least one item (piece)" or a similar expression thereof means one item (piece) or a plurality of items (pieces), that is, any combination of these items, including any combination of singular items (pieces) or plural items (pieces). For example, at least one of a, b, or c may indicate a, b, c, a and b, a and c, b and c, or a, b, and c.

It should be further understood that, unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B, and C. The foregoing uses three elements A, B, and C as an example to describe an optional case of the item. When an expression is "an item includes at least one of the following: A, B, ..., and X", in other words, more elements are included in the expression, a case to which the item is applicable may also be obtained according to the foregoing rule.

It should be further understood that a term "and/or" in this specification describes only an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first device, a first part of a protocol data unit PPDU from a second device in a first running mode, wherein the first part comprises a first signaling SIG symbol set and a first symbol set, one SIG symbol in the first SIG symbol set comprises an identifier of the first device, and the first symbol set is used to provide switching time for the first device to switch from the first running mode to a second running mode; and
receiving, by the first device, a second part of the PPDU in the second running mode.

2. The method according to claim 1, wherein the method further comprises:
switching, by the first device, from the first running mode to the second running mode in duration of the first symbol set.

3. The method according to claim 1 or 2, wherein the second part of the PPDU comprises data, and the method further comprises:
sending, by the first device, a first frame to the second device, wherein the first frame indicates that the first device has successfully received the PPDU; and
switching, by the first device, from the second running mode to the first running mode.

4. The method according to any one of claims 1 to 3, wherein the method further comprises:
sending, by the first device, a second frame to the second device, wherein the second frame comprises a first switching parameter, and the first switching parameter indicates the switching time for the first device to switch from the first running mode to the second running mode.

5. The method according to claim 4, wherein the first switching parameter is less than or equal to the duration of the first symbol set, or the first switching parameter is a quantity of symbols comprised in the first symbol set.

6. The method according to claim 4 or 5, wherein the PPDU is transmitted on a first link, the first link is one of N links, and all the N links are communication links between the first device and the second device; and
the second frame comprises N groups of running mode parameters, the N groups of running mode parameters one-to-one correspond to the N links, and each group of parameters comprises the following parameters:
switching time for the first device to switch from the first running mode to the second running mode on a link corresponding to the parameter, switching time for the first device to switch from the second running mode to the first running mode on the link corresponding to the parameter, and a channel bandwidth used by the first device in the first running mode on the link corresponding to the parameter.

7. The method according to any one of claims 1 to 6, wherein the method further comprises:
sending, by the first device, a third frame to the second device, wherein the third frame comprises a first state and a switching mode, the first state indicates that the first device is in the first running mode or the second running mode, and the switching mode is used to request whether to switch between the first running mode and the second running mode; and
receiving, by the first device, a fourth frame from the second device, wherein the fourth frame indicates whether switching between the first running mode and the second running mode is allowed.

8. The method according to claim 7, wherein the third frame further comprises M groups of running mode parameters, the M groups of running mode parameters one-to-one correspond to M links, the M links are communication links between the first device and the second device, and each group of parameters comprises the following parameters:
switching time for the first device to switch from the first running mode to the second running mode on a link corresponding to the parameter, switching time for the first device to switch from the second running mode to the first running mode on the link corresponding to the parameter, and a channel bandwidth used by the first device in the first running mode on the link corresponding to the parameter.

9. The method according to any one of claims 1 to 8, wherein a channel bandwidth used by the first device in the first running mode is 20 MHz, and a resource unit RU corresponding to the first SIG symbol set is allocated to a primary 20 MHz channel; and
the receiving, by a first device, a first part of a PPDU in a first running mode comprises:
receiving, by the first device, the first SIG symbol set of the PPDU on the primary 20 MHz channel in the first running mode.

10. The method according to any one of claims 1 to 9, wherein the first symbol set is a second SIG symbol set, the PPDU comprises a U-SIG symbol, the U-SIG symbol comprises first information, and the first information indicates whether a total quantity of SIG symbols in the first SIG symbol set and the second SIG symbol set exceeds a first value; and
when the total quantity of SIG symbols in the first SIG symbol set and the second SIG symbol set is less than or equal to the first value, a first field in the U-SIG symbol indicates the total quantity of SIG symbols in the first SIG symbol set and the second SIG symbol set; or
when the total quantity of SIG symbols in the first SIG symbol set and the second SIG symbol set is greater than the first value, a first field in the U-SIG symbol indicates a difference between the total quantity and the first value.

11. The method according to claim 10, wherein the U-SIG symbol comprises second information, and the second information indicates a quantity of SIG symbols in the first SIG symbol set.

12. The method according to any one of claims 1 to 11, wherein the first device has a plurality of groups of switching parameters on a second link, the second link is a communication link between the first device and the second device, one of the plurality of groups of switching parameters comprises two parameters, one of the two parameters indicates the switching time for the first device to switch from the first running mode to the second running mode, and the other of the two parameters indicates the switching time for the first device to switch from the second running mode to the first running mode.

13. The method according to any one of claims 1 to 12, wherein the first running mode is a low power consumption listening mode, and the second running mode is a high power consumption receiving mode.

14. A communication method, comprising:
determining, by a second device, a protocol data unit PPDU, wherein the PPDU comprises a first signaling SIG symbol set and a first symbol set, one SIG symbol in the first SIG symbol set comprises an identifier of a first device, and the first symbol set is used to provide switching time for the first device to switch from a first running mode to a second running mode; and
sending, by the second device, the PPDU to the first device using the first running mode.

15. The method according to claim 14, wherein the method further comprises:
receiving, by the second device, a first frame from the first device, wherein the first frame indicates that the first device has successfully received the PPDU.

16. The method according to claim 14 or 15, wherein the method further comprises:
receiving, by the second device, a second frame from the first device, wherein the second frame comprises a first switching parameter, and the first switching parameter indicates the switching time for the first device to switch from the first running mode to the second running mode.

17. The method according to claim 16, wherein the first switching parameter is less than or equal to duration of the first symbol set, or the first switching parameter is a quantity of symbols comprised in the first symbol set.

18. The method according to claim 16 or 17, wherein the PPDU is transmitted on a first link, the first link is one of N links, and all the N links are communication links between the first device and the second device; and
the second frame comprises N groups of running mode parameters, the N groups of running mode parameters one-to-one correspond to the N links, and each group of parameters comprises the following parameters:
switching time for the first device to switch from the first running mode to the second running mode on a link corresponding to the parameter, switching time for the first device to switch from the second running mode to the first running mode on the link corresponding to the parameter, and a channel bandwidth used by the first device in the first running mode on the link corresponding to the parameter.

19. The method according to any one of claims 16 to 18, wherein the method further comprises:
receiving, by the second device, a third frame from the first device, wherein the third frame comprises a first state and a switching mode, the first state indicates that the first device is in the first running mode or the second running mode, and the switching mode is used to request whether to switch between the first running mode and the second running mode; and
sending, by the second device, a fourth frame to the first device, wherein the fourth frame indicates whether switching between the first running mode and the second running mode is allowed.

20. The method according to claim 19, wherein the third frame further comprises M groups of running mode parameters, the M groups of running mode parameters one-to-one correspond to M links, all the M links are communication links between the first device and the second device, and each group of parameters comprises the following parameters:
switching time for the first device to switch from the first running mode to the second running mode on a link corresponding to the parameter, switching time for the first device to switch from the second running mode to the first running mode on the link corresponding to the parameter, and a channel bandwidth used by the first device in the first running mode on the link corresponding to the parameter.

21. The method according to any one of claims 14 to 20, wherein a channel bandwidth used by the first device in the first running mode is 20 MHz, and a resource unit RU corresponding to the first SIG symbol set is allocated to a primary 20 MHz channel; and
the sending, by the second device, the PPDU to the first device using the first running mode comprises:
sending, by the second device on the primary 20 MHz channel, the first SIG symbol set to the first device using the first running mode.

22. The method according to any one of claims 14 to 21, wherein the first symbol set is a second SIG symbol set, the PPDU comprises a U-SIG symbol, the U-SIG symbol comprises first information, and the first information indicates whether a total quantity of SIG symbols in the first SIG symbol set and the second SIG symbol set exceeds a first value; and
when the total quantity of SIG symbols in the first SIG symbol set and the second SIG symbol set is less than or equal to the first value, a first field in the U-SIG symbol indicates the total quantity of SIG symbols in the first SIG symbol set and the second SIG symbol set; or
when the total quantity of SIG symbols in the first SIG symbol set and the second SIG symbol set is greater than the first value, a first field in the U-SIG symbol indicates a difference between the total quantity and the first value.

23. The method according to claim 22, wherein the U-SIG symbol comprises second information, and the second information indicates a quantity of SIG symbols in the first SIG symbol set.

24. The method according to any one of claims 14 to 23, wherein the first device has a plurality of groups of switching parameters on a second link, the second link is a communication link between the first device and the second device, one of the plurality of groups of switching parameters comprises two parameters, one of the two parameters indicates the switching time for the first device to switch from the first running mode to the second running mode, and the other of the two parameters indicates the switching time for the first device to switch from the second running mode to the first running mode.

25. The method according to any one of claims 14 to 24, wherein the first running mode is a low power consumption listening mode, and the second running mode is a high power consumption receiving mode.

26. A communication apparatus, comprising a module or unit configured to perform the methods according to any one of claims 1 to 25.

27. A communication apparatus, comprising a processor, wherein the processor is configured to execute computer instructions stored in a memory, so that the apparatus performs the method according to any one of claims 1 to 13, or the apparatus performs the method according to any one of claims 14 to 25.

28. A communication apparatus, wherein the apparatus comprises a logic circuit and an input/output interface, and the logic circuit is configured to: be coupled to the input/output interface, and transmit data through the input/output interface, to perform the method according to any one of claims 1 to 13, or perform the method according to any one of claims 14 to 25.

29. A computer-readable storage medium, wherein the computer-readable storage medium stores computer instructions, and when the computer instructions are run on a computer, the method according to any one of claims 1 to 13 is performed, or the method according to any one of claims 14 to 25 is performed.

30. A chip, wherein the chip comprises a processor and a communication interface, and the processor reads, through the communication interface, instructions stored in a memory, to perform the method according to any one of claims 1 to 13, or perform the method according to any one of claims 14 to 25.
